# EUROPEAN PATENT APPLICATION

(11) **EP 1 867 609 A1**
(43) Date of publication of application: **19.12.2007**
(21) Application number: 07110420.2
(22) Date of filing: 15.06.2007
(51) Int. Cl.: C03B 33/03

(54) **Table for scoring sheets of glass**

(30) Priority: 16.06.2006 IT TO20060440
(71) Applicant: BOTTERO S.p.A., 12010 Cuneo (IT)
(72) Inventor: Margarie, Pierfranco, 10094, VALGIOIE (IT)
(74) Representative: Jorio, Paolo

(57) **Abstract**

A table (1) for scoring sheets (2) of glass has a supporting structure (3); and a board (4) defining a supporting plane (5) for a sheet (2) for scoring; the board (4) being associated with a peripheral safety barrier (15) extending close to the peripheral edge of the board (4) and at least upwards from the supporting plane (5) to retain the sheet on the supporting plane.

## Description

The present invention relates to a table for scoring sheets of glass.

To cut sheets of glass in general, cutting tables are used comprising a supporting plane for supporting the sheet for scoring; a movable bridge over the supporting plane; a carriage movable along the cut bridge; and a scoring head fitted to the carriage and pressed against the surface of the sheet to make one or more score lines, along which the sheet is then broken.

Using known tables of the type described above, the scoring parameters are set, the scoring heads selected, and the sheet manoeuvred and broken by a machine operator working in close contact with the machine, and so able to intervene promptly once the sheet is scored, e.g. to rotate or remove the scored sheet, or in the event scoring is not performed properly, or in the event of scoring defects, such as jamming, chipping of the sheet by the scoring head, or accidental breakage of the sheet.

Since the sheets are not clamped, but simply rest on the supporting plane, it sometimes happens, at the start of the scoring operation or when intervening as described above, that the work sheet catches on the scoring head and is pushed off the table towards to the operator, who, in current working conditions, is hard put to avoid the sheet, which acts as a cutting blade.

Moreover, the possibility of avoiding a sheet pushed off the table by the scoring head is practically zero in the case of last-generation tables, in which, to meet increasing output demand, both the cut bridge and the scoring head travel at increasingly high speed and acceleration to minimize downtime.

It is an object of the present invention to provide a table for scoring sheets of glass, designed to provide a straightforward, low-cost solution to the above problem, and which, at the same time, is cheap and easy to produce, and provides for performing the same operations, including breaking the scored sheets.

According to the present invention, there is provided a table for scoring sheets of glass, comprising a supporting structure; and a board having a peripheral edge and defining a supporting plane for a sheet for scoring; the table being characterized by also comprising peripheral safety means associated with said board and extending close to said peripheral edge and at least upwards from said supporting plane to define a stop barrier for retaining said sheet on said supporting plane.

A number of non-limiting embodiments of the invention will be described by way of example with reference to the accompanying drawings, in which:
Figure 1 shows a schematic view in perspective of a preferred embodiment of a table for scoring sheets of glass in accordance with the teachings of the present invention;
Figure 2 shows a schematic section of a detail in Figure 1;
Figure 3 shows a schematic section of a first variation of a detail in Figure 2;
Figure 4 shows a schematic section of a second variation of a detail in Figure 2;
Figures 5 and 6 show, respectively, a schematic view in perspective and a schematic section of a third variation of the Figure 2 detail.

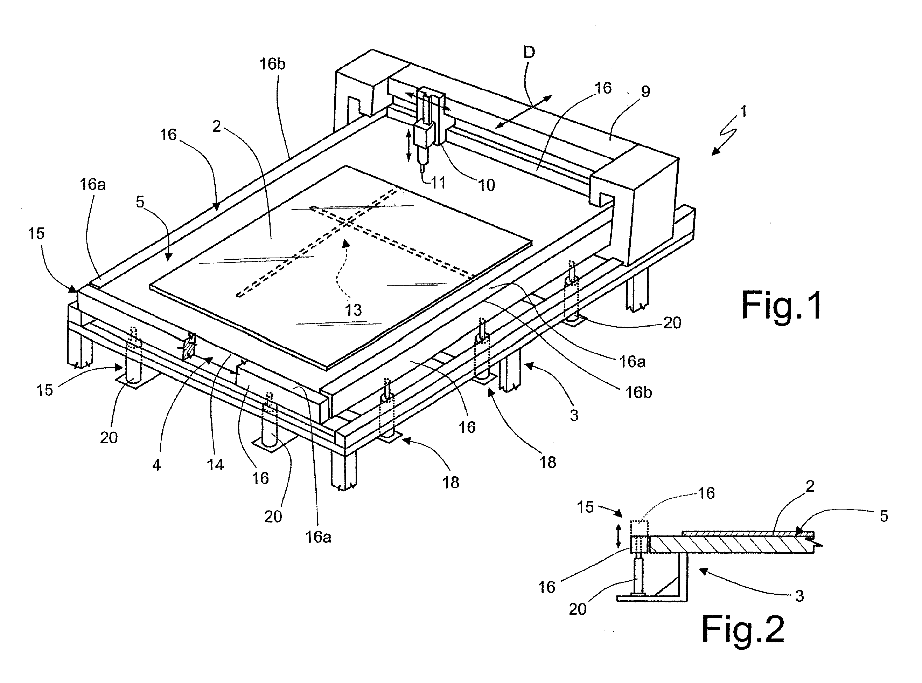

Number 1 in Figure 1 indicates as a whole a table for scoring and breaking sheets 2 of glass. Table 1 comprises a supporting structure 3, shown partly in Figures 1 to 3; and a top board 4 defining a supporting plane 5 for the work sheets 2. Supporting structure 3 is fitted with a scoring bridge 8 movable over supporting plane 5 in a longitudinal direction D; and a cross member 9 of scoring bridge 8 is fitted with a scoring head 10, which slides in opposite directions along cross member 9, and is fitted with a scoring wheel 11 movable to and from supporting plane 5 and about a vertical axis to produce one or more score lines on the sheet.

With reference to Figure 1, table 1 also comprises a known break assembly 13 for breaking sheet 2 along the score lines. In a variation not shown, table 1 has no break assembly 13, and sheet 2 is broken along the score lines by flexing it manually.

Board 4 has a peripheral edge 14 housed entirely inside a safety assembly 15, which defines a safety rim about supporting plane 5 to protect the table operator/s. In the Figure 1 example, the safety rim extends continuously about the whole of supporting plane 5, and defines a stop for any sheets pushed off supporting plane 5 by moving parts of table 1.

In the example shown in Figure 1 and particularly in Figure 2, safety assembly 15 comprises four elongated members or continuous straight walls 16, each extending parallel and substantially close to a respective side of board 4, and conveniently made of wood or metal or at least partly of shock-absorbing elastomeric material.

Safety assembly 15 also comprises an actuating and guide device 18 interposed between supporting structure 3 and walls 16 to move each wall 16, with respect to board 4 and supporting plane 5, between a raised position, shown by the dash line in Figure 2, in which wall 16 projects at least partly above supporting plane 5 to define a stop and retain work sheet 2 on supporting plane 5, and a lowered position, shown by the continuous line in Figures 1 and 2, in which a top peripheral surface 16a of wall 16 extends below or, preferably, flush with supporting plane 5. In the latter position, the top outer edge 16b of each wall 16 defines an edge by which to break the scored sheet manually.

In the example described, actuating and guide device 18 comprises, for each wall 16, a respective known guide-and-slide assembly (not shown) interposed between structure 3 and relative wall 16 and a number of pneumatic or hydraulic or electric linear actuators 20.

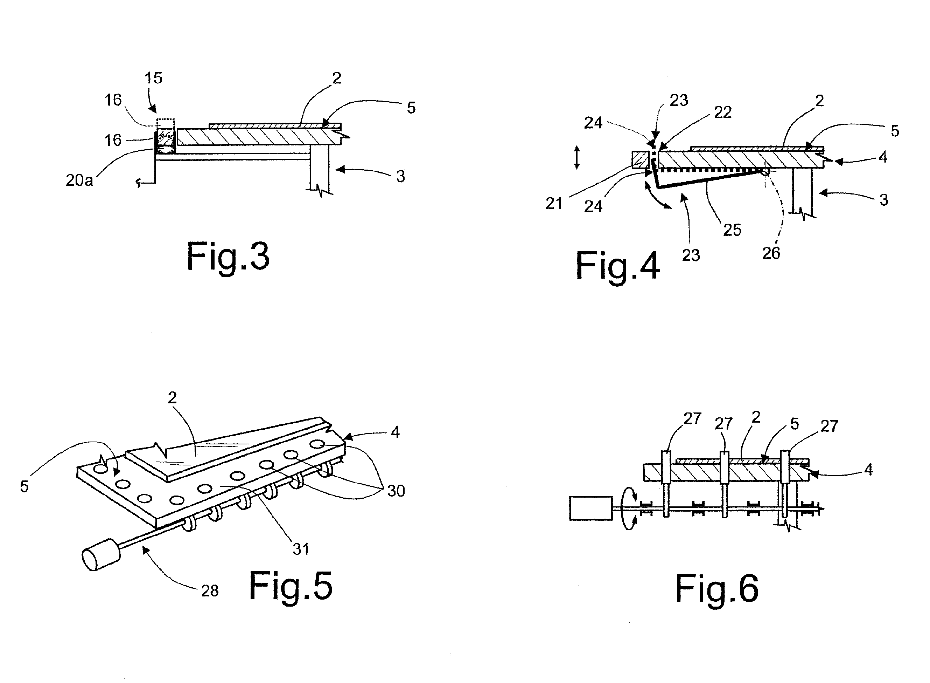

With reference to Figure 3, walls 16 are moved between said raised and lowered positions by a pneumatic air-cushion device 20a, which conveniently, though not necessarily, acts in opposition to a return spring (not shown) for restoring walls 16 to the lowered position in the absence of thrust by the air cushion.

In a variation not shown, walls 16 are connected to lever or cam transmissions operated by linear or angular actuators.

In the Figure 4 variation, lateral walls 16 are replaced by walls 21 connected integrally to structure 3 or to board 4, with their top surfaces flush with supporting plane 5, and each detached from the relative side of board 4 to define, with the board, a respective through gap 22. In this variation, safety assembly 15 comprises, in place of each wall 16, at least one contoured - in the example shown, L-shaped - member 23, in turn comprising an end stop portion 24 movable inside the relative gap. Each member 23 also comprises a connecting arm 25 hinged to supporting structure 3 or board 4 to rotate, about a fixed hinge axis 26, between a raised work position (shown by the dash line in Figure 4), in which end stop portion 24 extends at least partly above supporting plane 5 to form a stop preventing sheet 2 from being pushed over edge 14 of board 4 and, hence, off the supporting plane, and a rest position (shown by the continuous line), in which a top end edge of end stop portion 24 extends flush with or below supporting plane 5.

In an alternative embodiment (not shown), table 1 has no fixed walls 21.

In a further variation (not shown), contoured member 23 is replaced by a straightforward wall fitted to structure 3 or board 4 to slide, through gap 22, between said raised and lowered positions under the control of respective, conveniently pneumatic, e.g. air-cushion, or hydraulic, actuators.

In a further variation shown in Figures 5 and 6, movable walls 16 or contoured members 23 are replaced by a number of pin stops 27 (Figure 6) spaced a given distance apart to prevent the passage of sheets or portions of sheets of any size. Stops 27 are activated simultaneously by a conveniently pneumatic or hydraulic cam actuating device 28 for moving stops 27 between a raised retaining position (Figure 6), and a lowered rest position, in which stops 27 extend below supporting plane 5. Stops 27 preferably slide inside respective through holes 30 (Figure 5) formed through a peripheral portion 31 of board 4 or through lateral walls fixed to the perimeter of board 4. Alternatively, stops 27 may slide inside gaps similar to gaps 22 and/or be activated by pneumatic air-cushion devices.

In actual use, once sheet 2 is placed on supporting plane 5, and before scoring head 10 commences any movement over supporting plane 5, safety assembly 15 is activated to move walls 16, contoured members 23, or pin stops 27 into the raised positions to form, around the whole of the sheet and the whole perimeter of supporting plane 5, a safety barrier preventing the sheet from sliding off supporting plane 5, and so ensuring safe working conditions by safeguarding the operator against a sheet possibly being pushed accidentally over the edge of board 4.

When scoring is completed, the safety barrier is removed by restoring walls 16, contoured members 23, or pin stops 27 to the lowered positions, so table 1 assumes the configuration of an ordinary scoring table, on which the scored sheets can be broken using break assembly 13, or manually in the usual way by moving the sheet to align the score line with the edge of wall 16 or 21.

As will be clear from the foregoing description, providing peripheral stops effectively protects the operators without impairing or requiring major alterations to the table or to the scoring or breaking process. What is more, the solutions described can be applied quickly and cheaply to existing tables.

Clearly, changes may be made to table 1 as described herein without, however, departing from the protective scope as defined in the accompanying Claims.

More specifically, safety assembly 15 and, hence, the safety barrier may extend along only a portion, as opposed to the whole, of peripheral edge 14 of board 4, and in particular along the edge portion along which a dislodged sheet could strike the operator or cause damage to nearby equipment. More specifically, the safety barrier may obviously be dispensed with along the edge portion that is against a sheet loading unit or another supporting plane, e.g. for breaking the scored sheets.

As will also be clear from the foregoing description, the safety barriers may be formed differently from the ones described by way of example, though still for the purpose of preventing accidental slippage of the sheet off the supporting board.

Finally, table 1 as described may obviously be tiltable, i.e. with a tiltable board 4 for loading the sheets; in which case, assembly 15 may obviously be fitted entirely to the board to accompany the tilting movement of the board, or may be designed to activate the barrier activating devices when the board is in the horizontal work position.

## Claims

1. A table for scoring sheets of glass, comprising a supporting structure; and a board having a peripheral edge and defining a supporting plane for a sheet for scoring; the table being **characterized by** also comprising peripheral safety means associated with said board and extending close to said peripheral edge and at least upwards from said supporting plane to define a stop barrier for retaining said sheet on said supporting plane.

2. A table as claimed in Claim 1, **characterized in that** said peripheral safety means extend along the whole length of said peripheral edge.

3. A table as claimed in Claim 1 or 2,
**characterized in that** said peripheral safety means are movable, with respect to said supporting plane, between a raised position for stopping said sheet, and a lowered rest position.

4. A table as claimed in Claim 3, **characterized in that**, in said lowered rest position, said peripheral safety means have a top end surface substantially flush with said supporting plane or located below the supporting plane.

5. A table as claimed in any one of the foregoing Claims, **characterized in that** said peripheral safety means comprise at least one elongated stop member.

6. A table as claimed in any one of the foregoing Claims, **characterized in that** said peripheral safety means comprise, for each side of said table, at least one continuous stop bar.

7. A table as claimed in any one of Claims 1 to 4, **characterized in that** said peripheral safety means comprise at least one rotary member hinged to said board or said structure to rotate about a fixed hinge axis.

8. A table as claimed in any one of Claims 1 to 4, **characterized in that** said peripheral safety means comprise at least one row of movable pins.

9. A table as claimed in any one of Claims 3 to 8, **characterized by** also comprising pneumatic air-cushion actuating means for moving said peripheral safety means between said raised position and said lowered position.
